# FASCICULE DE BREVET EUROPEEN

(11) **EP 2 736 352 B1**
(45) Date de publication et mention de la délivrance du brevet: **28.12.2016**
(21) Numéro de dépôt: 11757417.8
(22) Date de dépôt: 29.07.2011
(51) Int. Cl.: A23L 9/20, A23L 2/00, A23L 7/161

(54) **PROCÉDÉ DE PRÉPARATION D'UNE COMPOSITION ALIMENTAIRE À BASE DE CRÈME DE RIZ**
VERFAHREN ZUR HERSTELLUNG EINER LEBENSMITTELZUSAMMENSETZUNG MIT REISSAHNE
METHOD FOR PREPARING A FOOD COMPOSITION USING CREAM OF RICE

(43) Date de publication de la demande: 04.06.2014
(73) Titulaire: Biotti, Jean, 01100 Oyonnax (FR); Serfaty, Yves, 01310 Buellas (FR)
(72) Inventeur: Parkoo, Koudjo Dodzi Selom, 01000 Bourg-en-Bresse (FR)
(74) Mandataire: Jeannet, Olivier
(86) Numéro de dépôt international: PCT/IB2011/053386
(87) Numéro de publication internationale: WO 2013/017911

(56) Documents cités:
- EP-A2- 0 371 725
- FR-A1- 2 346 987
- FR-A1- 2 744 885
- FR-A1- 2 847 428
- JP-A- 8 298 933
- JP-A- 2010 104 248

## Description

### Domaine de l'invention

La présente invention concerne un procédé de préparation d'une composition alimentaire à base de crème de riz, notamment d'une composition alimentaire soufflée à base de crème de riz dont la texture finale se positionne entre le soufflé traditionnel et la mie de pain.

Le riz est un ingrédient largement utilisé dans le domaine agro-alimentaire. Un de ses dérivés, la crème de riz, consiste généralement en une poudre de riz broyé. Les plats culinaires à base de crème de riz sont de plus en plus communs et appréciés. En effet, la crème de riz permet d'obtenir, après cuisson dans un liquide tel que de l'eau, une crème onctueuse et digeste, particulièrement utilisée dans l'alimentation macrobiotique et convenant notamment aux personnes allergiques au gluten.

### Arrière-plan de l'invention

Il n'est pas connu, à ce jour de réaliser des compositions alimentaires sous forme de soufflés à base de crème de riz.

Les publications de demandes de brevet N° FR 2 744 885, FR2346987, FR2847428, JP8298933, JP2010104248 illustrent divers procédés connus.

Certes, il est connu de réaliser des compositions alimentaires sous forme de soufflés traditionnels, tels que des soufflés au fromage. Ces compositions alimentaires ont l'inconvénient de présenter des propriétés physico-chimiques ne permettant pas de leur conférer une bonne stabilité après cuisson. Ainsi, après cuisson d'un soufflé traditionnel, celui-ci doit être consommé quasi instantanément afin de ne pas le voir s'affaisser lorsqu'il refroidit.

Il en résulte que des soufflés ayant subit une précuisson ne peuvent pas être réalisés industriellement, par exemple afin d'être vendus sous forme congelée.

La présente invention a pour objectif de remédier à ces inconvénients.

Selon l'invention, le procédé de préparation d'une composition alimentaire à base de crème de riz comprend les étapes consistant à :
- (A) préparer une première composition en réalisant successivement les sous-étapes consistant à :
   - (A1) mélanger une première quantité prédéterminée de liquide E₁ et une quantité prédéterminée de crème de riz CR jusqu'à l'obtention d'un fluide homogène ;
   - (A2) chauffer le fluide homogène à feu doux en y ajoutant une deuxième quantité prédéterminée de liquide E₂ jusqu'à l'obtention d'un liquide blanchâtre, en évitant la formation de grumeaux ;
   - (A3) tout en remuant, chauffer le liquide blanchâtre obtenu à feu vif, jusqu'à l'obtention d'une pâte visqueuse homogène ;
   - (A4) faire refroidir la pâte visqueuse obtenue jusqu'à température ambiante ;
- (B) préparer une deuxième composition, à partir de la première composition refroidie, en réalisant successivement les sous-étapes consistant à :
   - (B1) détendre la première composition sous forme de pâte visqueuse, notamment au moyen d'un batteur-mélangeur ;
   - (B2) ajouter progressivement à la pate détendue une quantité prédéterminée de semoule S, jusqu'à l'obtention d'une pate homogène ;
- (C) préparer une troisième composition, à partir de la deuxième composition obtenue, en ajoutant successivement :
   - (C1) une troisième quantité prédéterminée de liquide E₃ à la deuxième composition de manière progressive, puis
   - (C2) une quantité prédéterminée de levure L à ce mélange ;
- (D) verser la troisième composition dans au moins un moule ;
- (E) faire cuire la composition mise en moule à la vapeur, à une température voisine de 100°C pendant une durée comprise entre 2 et 15 minutes ;
- (F) immédiatement après cuisson, faire refroidir rapidement ledit au moins un moule ;
- (G) après refroidissement, démouler la composition alimentaire obtenue ; procédé dans lequel :
   E₁ représente entre 15 et 40 % en masse de la composition totale avant cuisson ;
   E₂ représente entre 15 et 40 % en masse de la composition totale avant cuisson ;
   E₃ représente entre 15 et 40 % en masse de la composition totale avant cuisson ;
   CR représente entre 10 et 50 % en masse de la composition totale avant cuisson ;
   S représente entre 7 et 20 % en masse de la composition totale avant cuisson, et
   L représente entre 1 et 3 % en masse de la composition totale avant cuisson.

Ainsi, le procédé selon l'invention permet de réaliser industriellement une composition alimentaire soufflée à base de crème de riz, sous différentes formes en fonction du ou des moules utilisés. La formation de bulles de vapeur d'eau constitutives d'un soufflé traditionnel et responsables de l'affaissement de celui-ci lorsqu'elles se condensent au cours de l'étape de refroidissement du soufflé, est évitée. La composition alimentaire obtenue présente donc une bonne stabilité après cuisson, c'est-à-dire conservant sa structure expansée après refroidissement même en cas de congélation, tout en ayant un caractère moelleux et aéré. L'homogénéité de la composition entre chaque étape est toutefois primordiale pour obtenir un résultat optimal.

De préférence, les liquides E₁, E₂, E₃ sont de l'eau.

De préférence encore, la quantité prédéterminée de levure L ajoutée à la sous-étape (C2) est répartie en une quantité de levure boulangère L_{B} comprise entre 0,2 et 2 % en masse de la composition totale avant cuisson et une quantité de levure chimique L_{C} comprise entre 0,1 et 0,3 % en masse de la composition totale avant cuisson.

Selon une forme de réalisation préférée, les quantités de constituants de la composition alimentaire sont telles que :
E₁ représente 13,04 % en masse de la composition totale avant cuisson ;
E₂ représente 31,65 % en masse de la composition totale avant cuisson ;
E₃ représente 22,15 % en masse de la composition totale avant cuisson ;
CR représente 15,82 % en masse de la composition totale avant cuisson ;
S représente 15,82 % en masse de la composition totale avant cuisson ;
L_{B} représente 1,33 % en masse de la composition totale avant cuisson ;
L_{C} représente 0,19 % en masse de la composition totale avant cuisson.

Avantageusement, la sous-étape (A1) est réalisée au moyen d'un batteur-mélangeur, puis le fluide homogène obtenu est placé en cellule de refroidissement jusqu'à ce que sa température soit comprise entre 0 et 4°C avant de procéder à la sous-étape (A2).

Avantageusement encore, la sous-étape de refroidissement (A4) et l'étape de refroidissement (F) sont réalisées en cellule de refroidissement rapide.

Selon une forme de réalisation possible de la présente invention, la semoule S utilisée lors de l'étape (B2) est une semoule de riz.

Ainsi, dans ce cas, la composition alimentaire obtenue est totalement exempte de gluten.

De préférence toutefois, la semoule utilisée lors de l'étape (B2) est une semoule extra fine de blé dur, communément dénommée semoule fine-fine.

Selon une forme de réalisation préférée, la sous-étape (C2) est réalisée de la manière suivante :
- la levure boulangère L_{B} est diluée dans une quantité en masse d'eau tiède égale environ à 2,4 fois la masse de la levure L_{B} avant d'être introduite au mélange ;
- après apparition des premiers signes de fermentation, la levure chimique L_{C} est finalement incorporée au mélange de manière à obtenir la troisième composition.

Avantageusement, on laisse reposer la troisième composition obtenue lors de l'étape (C) avant sa mise en moule, notamment à une température environ égale à 30°C pendant une durée de 45 minutes.

De préférence, la troisième composition est versée, au cours de l'étape (D), dans une pluralité de moules en silicone de quelques centimètres cubes de volume.

L'utilisation de moules en silicone permet d'éviter d'avoir recours au graissage de leurs parois, la composition alimentaire obtenue étant ainsi, dans ce cas, exempte de matières grasses.

De préférence encore, l'étape de cuisson (E) est réalisée dans un four-vapeur pendant une durée de 6 minutes.

Selon une forme de réalisation préférée, une étape additionnelle est réalisée entre les sous-étapes (C1) et (C2), cette étape consistant à ajouter au mélange une quantité supplémentaire de sel environ égale à 0,19 % en masse de la quantité totale des autres constituants formant la composition avant cuisson, et une quantité supplémentaire de sucre environ égale à 1,27 % en masse de la quantité totale des autres constituants formant la composition avant cuisson.

Selon une forme de réalisation préférée, une étape additionnelle est réalisée entre la sous-étape (B2) et l'étape (C) ou entre l'étape (D) et l'étape (E), cette étape additionnelle consistant à ajouter au mélange un ou des ingrédient(s) destiné(s) à agrémenter le goût de la composition alimentaire finale.

Ainsi, la composition alimentaire obtenue par le procédé selon l'invention peut être réalisée aussi bien sans ingrédients gustatifs supplémentaires, ou au contraire peut incorporer des ingrédients destinés à agrémenter son goût.

L'invention sera bien comprise, et d'autres caractéristiques et avantages de celle-ci apparaîtront en référence aux figures annexées et à la description détaillée ci-dessous.

### Brève description des figures

La figure 1 représente une bouchée soufflée à base de crème de riz obtenue par un procédé non-conforme à l'invention, et
la figure 2 représente une bouchée soufflée à base de crème de riz obtenue par le procédé selon l'invention.

### Description d'une forme de réalisation préférée

La description ci-dessous illustre, à titre d'exemple non limitatif, un procédé de préparation optimal d'une composition alimentaire soufflée à base de crème de riz.

La crème de riz CR utilisée est celle de marque *BLOCH Société Nouvelle Sarl* de référence COND-01-F24

La semoule S utilisée est une semoule extra fine de blé dure (communément dénommée semoule fine-fine) de marque ALPINA, code article 41540 et de gamme 5 S.

La levure boulangère L_{B} utilisée consiste en des cellules vivantes de *Saccharomyces cerevisia.*

La levure chimique L_{C} utilisée a la composition suivante :
- 25 m% de Bicarbonate de soude ;
- 60 m% d'hydrogénotartrate de potassium ;
- 15 m% d'amidon de maïs.

Les différents constituants de la composition ont préalablement été préparés selon les proportions suivantes :
- eau E1 : 412 g (13,04 m%) ;
- eau E2 : 1000 g (31,65 m%) ;
- eau E3 : 700 g (22,15 m%) ;
- crème de riz CR : 500 g (15,82 m%) ;
- semoule de blé dur S : 500 g (15,82 m%) ;
- levure boulangère L_{B} : 42 g (1,33 m%), et
- levure chimique L_{C}: 6 g (0,19 m%).

Deux composants additionnels, dont l'utilisation est destinée à des fins purement gustatives, ont également été préparés selon les proportions suivantes :
- sel : 6 g (soit environ 0,19 % de la masse totale des composants précédemment pesés)
- sucre: 40 g (soit environ 1,27 % de la masse totale des composants précédemment pesés)

La composition alimentaire a ensuite été réalisée selon le procédé comprenant les étapes consistant à :
- (A) préparer une première composition en réalisant successivement les sous-étapes consistant à :
   - (A1) mélanger, à l'aide d'un batteur-mélangeur, les 412 g d'eau E₁ et les 500 g de crème dé riz CR jusqu'à l'obtention d'un fluide homogène ;
   - (A2) chauffer le fluide homogène à feu doux en y ajoutant les 1000 g d'eau E₂ jusqu'à l'obtention d'un liquide blanchâtre, en évitant la formation de grumeaux ;
   - (A3) tout en remuant, chauffer le liquide blanchâtre obtenu à feu vif, jusqu'à l'obtention d'une pâte visqueuse homogène ;
   - (A4) faire refroidir la pâte visqueuse obtenue en une cellule de refroidissement rapide jusqu'à température ambiante ;
- (B) préparer une deuxième composition, à partir de la première composition refroidie, en réalisant successivement les sous-étapes consistant à :
   - (B1) détendre la première composition sous forme de pâte visqueuse au moyen d'un batteur-mélangeur ;
   - (B2) ajouter progressivement à la pate détendue les 500 g de semoule extra fine de blé dur S jusqu'à l'obtention d'une pate homogène ;
- (C) préparer une troisième composition, à partir de la deuxième composition obtenue, en ajoutant successivement :
   - (C1) les 700 g d'eau E₃ à la deuxième composition de manière progressive, puis les 40 g de sucre en une seule fois, et enfin les 6 g de sel ;
   - (C2) les 42 g de levure boulangère L_{B} préalablement dilués dans 100 g d'eau tiède, puis, après apparition des premiers signes de fermentation, les 6 g de levure chimique L_{C} ;
- (D) laisser reposer la troisième composition obtenue à une température environ égale à 30°C pendant une durée de 45 minutes, puis la verser dans une pluralité de moule en silicone de quelques centimètres cubes de volume ;
- (E) faire cuire la composition mise en moule dans un four-vapeur à une température voisine de 100°C pendant une durée de 6 minutes ;
- (F) immédiatement après cuisson, faire refroidir les moules dans une cellule de refroidissement rapide ;
- (G) après refroidissement, démouler la composition alimentaire obtenue.

La composition alimentaire obtenue se présente donc sous forme de bouchées soufflées à base de crème de riz conservant leur structure expansée après refroidissement, tout en ayant un caractère moelleux et aéré. L'homogénéité de la composition entre chaque étape est toutefois primordiale pour obtenir un résultat optimal.

Il est ainsi aisé de réaliser des bouchées soufflées à base de crème de riz de façon industrielle et de les commercialiser par exemple sous forme congelée. Ces bouchées, même congelées, ayant l'avantage de conserver leur structure expansée après l'étape de refroidissement suivant leur cuisson, un consommateur aura donc uniquement besoin de les réchauffer, par exemple dans un four à micro-ondes, avant de les consommer.

Les matières premières utilisées pour la mise en oeuvre du procédé selon l'invention sont particulièrement pauvres en composés tels glucides, protides et lipides. Ainsi, la composition alimentaire obtenue contient également une très faible quantité de ces composés. En outre, les quantités de sucre et de sel ajoutées dans la composition, sont en proportion très faibles.

Les valeurs nutritionnelles pour 100g de composition alimentaire obtenue par le procédé selon la forme de réalisation préférée de l'invention sont indiquées dans le Tableau 1 ci-dessous.

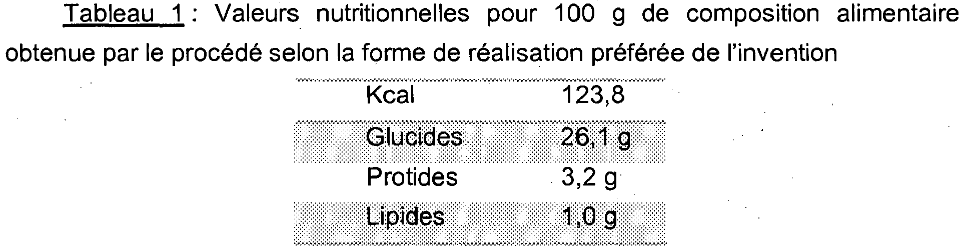

Par comparaison, les valeurs nutritionnelles de pâtes alimentaires sont données dans le Tableau 2 ci-dessous.

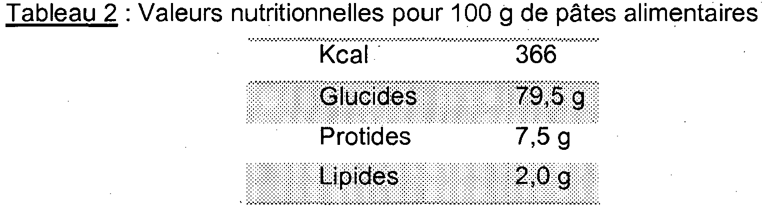

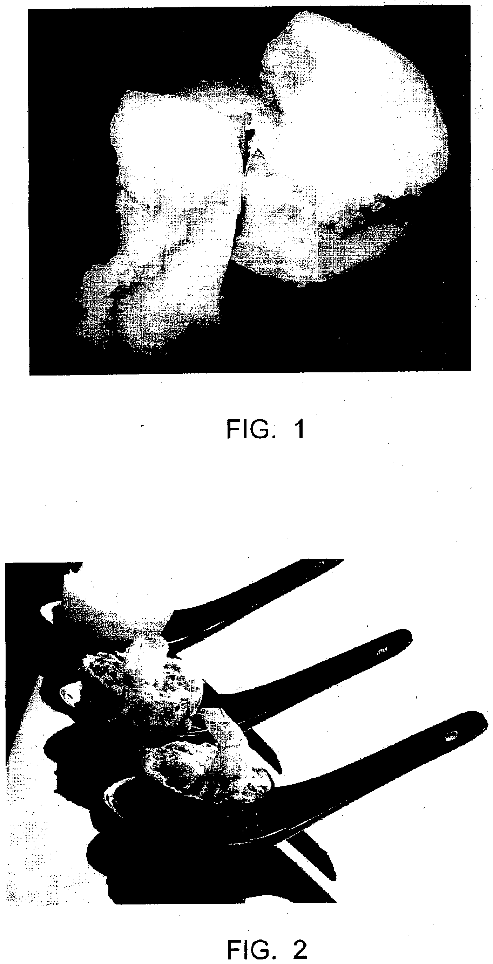

Une bouchée obtenue par un procédé non-conforme à l'invention, ou par un procédé dans lequel l'homogénéité de la composition ne serait pas respectée entre chaque étape, est représentée sur la figure 1. Il peut être constaté que cette bouchée présente une structure compacte, du type polenta et ne correspond ainsi pas au résultat recherché selon l'invention.

Les trois bouchées représentées sur la figure 2 sont, elles, obtenues par le procédé selon l'invention. Chacune de ces bouchées est disposée sur une cuillère et est agrémentée de divers ingrédients (herbes, crevettes). Leur structure est conforme au résultat recherché selon l'invention. En effet, les alvéoles de petite taille que l'on distingue sur leur périphérie illustrent le fait que la structure obtenue est expansée, moelleuse et aérée.

Il doit être noté que tout type d'ingrédient dit gustatif peut être ajouté à la composition afin d'agrémenter le goût des bouchées obtenues.

Ce type d'ingrédient, pouvant notamment consister en des fromages, des viandes, des poissons ou fruits de mer, des épices, des herbes aromatiques, du chocolat, de la marmelade, des fruits secs, etc., est de préférence ajouté :
- entre la sous-étape (B2) et l'étape (C) s'il s'agit d'herbes aromatiques, d'épices et/ou d'autres formes de mets mixés pour l'obtention d'une composition alimentaire finale aromatisée ;
- entre l'étape (D) et l'étape (E) s'il s'agit d'ingrédients entiers ou mixés pour l'obtention d'une composition alimentaire finale fourrée.

Il apparaît de ce qui précède que l'invention fournit un procédé de préparation d'une composition alimentaire à base de crème de riz, notamment d'une composition alimentaire soufflée à base de crème de riz dont la texture finale se positionne entre le soufflé traditionnel et la mie de pain, présentant l'avantage déterminant de conservée sa structure expansée après l'étape de refroidissement suivant sa cuisson.

L'invention a été décrite ci-dessus en référence à une forme de réalisation donnée à titre de pur exemple. Il va de soi qu'elle n'est pas limitée à cette forme de réalisation et qu'elle s'étend à toutes les autres formes de réalisation couvertes par les revendications annexées.

## Revendications

1. - Procédé de préparation d'une composition alimentaire à base de crème de riz, notamment d'une composition alimentaire soufflée à base de crème de riz dont la texture finale se positionne entre le soufflé traditionnel et la mie de pain, **caractérisé en ce qu'**il comprend les étapes consistant à :
- (A) préparer une première composition en réalisant successivement les sous-étapes consistant à :
- (A1) mélanger une première quantité prédéterminée de liquide E₁ et une quantité prédéterminée de crème de riz CR jusqu'à l'obtention d'un fluide homogène ;
- (A2) chauffer le fluide homogène à feu doux en y ajoutant une deuxième quantité prédéterminée de liquide E₂ jusqu'à l'obtention d'un liquide blanchâtre, en évitant la formation de grumeaux ;
- (A3) tout en remuant, chauffer le liquide blanchâtre obtenu à feu vif, jusqu'à l'obtention d'une pâte visqueuse homogène ;
- (A4) faire refroidir la pâte visqueuse obtenue jusqu'à température ambiante ;
- (B) préparer une deuxième composition, à partir de la première composition refroidie, en réalisant successivement les sous-étapes consistant à :
- (B1) détendre la première composition sous forme de pâte visqueuse, notamment au moyen d'un batteur-mélangeur ;
- (B2) ajouter progressivement à la pate détendue une quantité prédéterminée de semoule S, jusqu'à l'obtention d'une pate homogène ;
- (C) préparer une troisième composition, à partir de la deuxième composition obtenue, en ajoutant successivement :
- (C1) une troisième quantité prédéterminée de liquide E₃ à la deuxième composition de manière progressive, puis
- (C2) une quantité prédéterminée de levure L à ce mélange ;
- (D) verser la troisième composition dans au moins un moule ;
- (E) faire cuire la composition mise en moule à la vapeur, à une température voisine de 100°C pendant une durée comprise entre 2 et 15 minutes ;
- (F) immédiatement après cuisson, faire refroidir rapidement ledit au moins un moule ;
- (G) après refroidissement, démouler la composition alimentaire obtenue ; procédé dans lequel :
E₁ représente entre 15 et 40 % en masse de la composition totale avant cuisson ;
E₂ représente entre 15 et 40 % en masse de la composition totale avant cuisson ;
E₃ représente entre 15 et 40 % en masse de la composition totale avant cuisson ;
CR représente entre 10 et 50 % en masse de la composition totale avant cuisson ;
S représente entre 7 et 20 % en masse de la composition totale avant cuisson, et
L représente entre 1 et 3 % en masse de la composition totale avant cuisson.

2. - Procédé selon la revendication 1, **caractérisé en ce que** les liquides E₁, E₂, E₃ sont de l'eau.

3. - Procédé selon la revendication 1 ou la revendication 2, **caractérisé en ce que** la quantité prédéterminée de levure L ajoutée à la sous-étape (C2) est répartie en une quantité de levure boulangère L_{B} comprise entre 0,2 et 2 % en masse de la composition totale avant cuisson et une quantité de levure chimique L_{C} comprise entre 0,1 et 0,3 % en masse de la composition totale avant cuisson.

4. - Procédé selon la revendication 3, **caractérisé en ce que** les quantités de constituants de la composition alimentaire sont telles que :
E₁ représente 13,04 % en masse de la composition totale avant cuisson ;
E₂ représente 31,65 % en masse de la composition totale avant cuisson ;
E₃ représente 22,15 % en masse de la composition totale avant cuisson ;
CR représente 15,82 % en masse de la composition totale avant cuisson ;
S représente 15,82 % en masse de la composition totale avant cuisson ;
L_{B} représente 1,33 % en masse de la composition totale avant cuisson ;
L_{C} représente 0,19 % en masse de la composition totale avant cuisson.

5. - Procédé selon l'une des revendications 1 à 4, **caractérisé en ce que** la sous-étape (A1) est réalisée au moyen d'un batteur-mélangeur, puis le fluide homogène obtenu est placé en cellule de refroidissement jusqu'à ce que sa température soit comprise entre 0 et 4°C avant de procéder à la sous-étape (A2).

6. - Procédé selon l'une des revendications 1 à 5, **caractérisé en ce que** la sous-étape de refroidissement (A4) et l'étape de refroidissement (F) sont réalisées en cellule de refroidissement rapide.

7. - Procédé selon l'une des revendications 1 à 6, **caractérisé en ce que** la semoule S utilisée lors de l'étape (B2) est une semoule de riz.

8. - Procédé selon l'une des revendications 1 à 6, **caractérisé en ce que** la semoule S utilisée lors de l'étape (B2) est une semoule extra fine de blé dur, communément dénommée semoule fine-fine.

9. - Procédé selon l'une des revendications 3 à 8, **caractérisé en ce que** la sous-étape (C2) est réalisée de la manière suivante :
- la levure boulangère L_{B} est diluée dans une quantité en masse d'eau tiède égale environ à 2,4 fois la masse de la levure L_{B} avant d'être introduite au mélange ;
- après apparition des premiers signes de fermentation, la levure chimique L_{C} est finalement incorporée au mélange de manière à obtenir la troisième composition.

10. - Procédé selon l'une des revendications 1 à 9, **caractérisé en ce qu'**on laisse reposer la troisième composition obtenue lors de l'étape (C) avant sa mise en moule, notamment à une température environ égale à 30°C pendant une durée de 45 minutes.

11. - Procédé selon l'une des revendications 1 à 10, **caractérisé en ce que** la troisième composition est versée, au cours de l'étape (D), dans une pluralité de moules en silicone de quelques centimètres cubes de volume.

12. - Procédé selon l'une des revendications 1 à 11, **caractérisé en ce que** l'étape de cuisson (E) est réalisée dans un four-vapeur pendant une durée de 6 minutes.

13. - Procédé selon l'une des revendications 1 à 12, **caractérisé en ce qu'**une étape additionnelle est réalisée entre les sous-étapes (C1) et (C2), cette étape consistant à ajouter au mélange une quantité supplémentaire de sel environ égale à 0,19 % en masse de la quantité totale des autres constituants formant la composition avant cuisson, et une quantité supplémentaire de sucre environ égale à 1,27 % en masse de la quantité totale des autres constituants formant la composition avant cuisson.

14. - Procédé selon l'une des revendications 1 à 13, **caractérisée en ce qu'**une étape additionnelle est réalisée entre la sous-étape (B2) et l'étape (C) ou entre l'étape (D) et l'étape (E), cette étape additionnelle consistant à ajouter au mélange un ou des ingrédient(s) destiné(s) à agrémenter le goût de la composition alimentaire finale.

## Patentansprüche

1. - Verfahren zur Herstellung einer Nahrungsmittelzusammensetzung auf Basis von Reiscreme, insbesondere eine Nahrungsmittelzusammensetzung in der Form eines Soufflé auf Basis von Reiscreme, die endgültige Textur wird zwischen den traditionellen Soufflé und Brotkrumen gelegen, dadurch umfassend die gekennzeichnete Schritte
- (A) Herstellung einer ersten Zusammensetzung, durch sukzessives Durchführen der folgenden Teilschritte:
- (A1) Mischen einer ersten vorbestimmten Menge an Flüssigkeit E₁ und eine vorbestimmte Menge an Reiscreme CR bis zum Erhalt eines homogenen Fluids;
- (A2) Erhitzen der homogenen Fluid bei niedriger Hitze und Zugabe eines zweiten vorbestimmten Flüssigkeitsmenge E₂, bis man eine weißliche Flüssigkeit erhalten, und Klumpenbildung vermeiden;
- (A3) unter Rühren, Erhitzen die erhaltene weißliche Flüssigkeit über hohe Hitze bis eine homogene viskose Paste erhalten;
- (A4) Kühlen der erhaltene viskosen Teig auf Raumtemperatur;
- (B) Herstellen einer zweiten Zusammensetzung aus dem ersten gekühlten Zusammensetzung durch sukzessives Durchführen der folgenden Teilschritte:
- (B1) Verdünnen der ersten Zusammensetzung in einer viskosen Teig, insbesondere mittels einer Schlag-Mischer;
- (B2) allmähliche Zugabe der verdünnten Paste eine vorbestimmte Menge Grieß S, bis zum Erhalt einer homogenen Teig;
- (C) Herstellen einer dritten Zusammensetzung aus der zweiten Zusammensetzung erhalten wird, indem nacheinander:
- (C1) die schrittweise Zugabe einer dritten vorbestimmten Flüssigkeitsmenge E₃ zu der zweiten Zusammensetzung, dann
- (C2) Zugabe einer vorbestimmten Menge der Hefe L zu dieser Mischung;
- (D) Gießen der dritten Zusammensetzung in mindestens einer Form;
- (E) Dämpfen die Zusammensetzung gegossen in der Form bei einer Temperatur nahe 100 ° C für einen Zeitraum von zwischen 2 und 15 Minuten;
- (F) unmittelbar nach dem Dämpfen, schnelles Abkühlen der wenigstens einen Form;
- (G) nach dem Abkühlen, Entformen des erhaltenen Nahrungsmittelzusammensetzung;
das Verfahren, bei dem:
E₁ steht für zwischen 15 und 40 Gewichts-% der Gesamtzusammensetzung vor dem Dämpfen;
E₂ stellt zwischen 15 und 40 Gewichts-% der Gesamtzusammensetzung vor dem Dämpfen;
E₃ stellt zwischen 15 und 40 Gewichts-% der Gesamtzusammensetzung vor dem Dämpfen;
CR stellt zwischen 10 und 50 Gewichts-% der Gesamtzusammensetzung vor dem Dämpfen;
S stellt zwischen 7 und 20 Gewichts-% der Gesamtzusammensetzung vor dem Dämpfen und
L stellt zwischen 1 und 3 Gewichts-% der Gesamtzusammensetzung vor dem Dämpfen.

2. - Verfahren nach Anspruch 1, **dadurch gekennzeichnet, dass** die Flüssigkeit E₁, E₂, E₃ sind Wasser.

3. - Verfahren nach Anspruch 1 oder Anspruch 2, **dadurch gekennzeichnet, daß** die vorbestimmte Menge an Hefe L an dem Unterschritt (C2) zugegeben wird in einer Menge von Backhefe L_{B} zwischen 0,2 und 2 Gewichts-% der Gesamtzusammensetzung vor verteilten Dampfbehandlung und eine Menge des chemischen Hefe Lc zwischen 0,1 und 0,3 Gewichts-% der Gesamtzusammensetzung vordem Dämpfen.

4. - Verfahren nach Anspruch 3, **dadurch gekennzeichnet, dass** die Menge der Bestandteile der Nahrungsmittelzusammensetzung so sind, dass:
E₁ stellt 13,04% des Gewichts der Gesamtzusammensetzung vor dem Dämpfen;
E₂ stellt 31,65% des Gewichts der Gesamtzusammensetzung vor dem Dämpfen;
E₃ stellt 22,15 Gewichts-% der Gesamtzusammensetzung vor dem Dämpfen;
CR stellt 15,82 Gewichts-% der Gesamtzusammensetzung vor dem Dämpfen;
S stellt 15,82 Gewichts-% der Gesamtzusammensetzung vor dem Dämpfen;
L_{B} stellt 1,33% des Gewichts der Gesamtzusammensetzung vor dem Dämpfen;
Lc stellt 0,19 Gewichts-% der Gesamtzusammensetzung vor dem Dämpfen.

5. - Verfahren nach einem der Ansprüche 1 bis 4, **dadurch gekennzeichnet, dass** der Unterschritt (A1) mit Hilfe einer Schlagmischer durchgeführt wird, dann wird das erhaltene homogene Fluid in einer Kühlkammer, bis ihre Temperatur sich zwischen 0 und 4 ° C befindet, bevor mit dem Teilschritt (A2).

6. . - Verfahren nach einem der Ansprüche 1 bis 5, **dadurch gekennzeichnet, dass** die Kühlunterschritt (A4), und der Kühlschritt (F) werden im Schnellkühler gebildet.

7. - Verfahren nach einem der Ansprüche 1 bis 6, **dadurch gekennzeichnet, daß** der Grieß S in Schritt (B2), ein Reisgriess verwendet wird.

8. - Verfahren nach Anspruch 1-6, **dadurch gekennzeichnet, daß** der Grieß S in Schritt (B2) verwendet wird, ist eine extra feine Weizengrieß, die gemeinhin als Fein-Fein-Grieß bekannt.

9. - Verfahren nach einem der Ansprüche 3 bis 8, **dadurch gekennzeichnet, dass** der Unterschritt (C2) wird wie folgt durchgeführt:
- Backhefe L_{B} wird in einer Menge von warmem Wasser verdünnt, etwa gleich sind, nach Gewicht, von 2,4-mal dem Gewicht der Hefe L_{B}, bevor sie auf die Mischung eingebracht;
- Nach dem Auftreten der ersten Zeichen der Fermentation wird die chemische Hefe Lc schließlich in der Mischung enthalten, um die dritte Zusammensetzung zu erhalten.

10. - Verfahren nach einem der Ansprüche 1 bis 9, **dadurch gekennzeichnet, dass** die in Schritt (C) erhaltenen dritten Zusammensetzung darf vor Formungsständer, insbesondere bei einer Temperatur ungefähr gleich 30 ° C für einen Zeitraum von 45 Minuten stehenlassen.

11. - Verfahren nach einem der Ansprüche 1 bis 10, **dadurch gekennzeichnet, dass** die dritte Zusammensetzung gegossen wird, während des Schrittes (D), in einer Vielzahl von Silikon-Formen von wenigen Kubikzentimeter im Volumen gegossen wird.

12. - Verfahren nach einem der Ansprüche 1 bis 11, **dadurch gekennzeichnet, daß** der Dampfbehandlungsschritt (E) wird in einem Dampfofen für einen Zeitraum von 6 Minuten durchgeführt.

13. - Verfahren nach einem der Ansprüche 1 bis 12, **dadurch gekennzeichnet, daß** ein zusätzlicher Schritt zwischen den Teilschritten (C1) und (C2) durchgeführt wird, dieser Schritt, bestehend in der Zugabe zu dem Gemisch eine zusätzliche Menge Salz gleich etwa 0,19%, Gewichtsprozent der Gesamtmenge der anderen Komponenten, die die Zusammensetzung vor der Dampfbehandlung, und einer zusätzlichen Zuckermenge gleich ungefähr 1,27 Gewichts-% der Gesamtmenge der anderen Komponenten, die die Zusammensetzung vordem Dämpfen.

14. - Verfahren nach einem der Ansprüche 1 bis 13, **dadurch gekennzeichnet, daß** ein zusätzlicher Schritt zwischen dem Teilschritt (B2) und Schritt (C) durchgeführt wird oder zwischen Schritt (D) und Schritt (E), dieser zusätzliche Schritt darin besteht, Zugabe zu der Mischung ein oder mehrere Bestandteile zum Verbessern der Geschmack des endgültigen Nahrungsmittelzusammensetzung.

## Claims

1. - A method for preparing a food composition based on cream of rice, in particular a food composition in the form of a soufflé and containing cream of rice, which final texture is situated between the traditional soufflé and bread crumbs, **characterized in that** comprising the steps of:
- (A) preparing a first composition by performing in succession the steps of:
- (A1) mixing a first predetermined amount of liquid E₁ and a predetermined amount of cream of rice CR until obtaining a homogeneous fluid;
- (A2) heating the homogeneous fluid over low heat, and adding a second predetermined amount of liquid E₂ until obtaining a whitish liquid, and avoiding the formation of lumps;
- (A3) while stirring, heating the whitish liquid obtained over high heat until obtaining a homogeneous viscous paste;
- (A4) cooling the viscous paste obtained to room temperature;
- (B) preparing a second composition, from the cooled first composition, by successively performing the sub-steps of:
- (B1) diluting the first composition into a viscous paste, especially by means of a beater-mixer;
- (B2) gradually adding to the diluted paste a predetermined amount of semolina S, until obtaining a homogeneous paste;
- (C) preparing a third composition, from the second composition obtained, by successively:
- (C1) progressively adding a third predetermined amount of liquid E₃ to the second composition, then
- (C2) adding a predetermined quantity of yeast L to this mixture;
- (D) pouring the third composition in at least one mold;
- (E) steaming the composition poured in the mold at a temperature close to 100°C for a period of between 2 and 15 minutes;
- (F) immediately after steaming, rapidly cooling said at least one mold;
- (G) after cooling, demolding the food composition obtained;
the method wherein:
E₁ represents between 15 and 40% by weight of the total composition before steaming;
E₂ represents between 15 and 40% by weight of the total composition before steaming;
E₃ represents between 15 and 40% by weight of the total composition before curing;
CR represents between 10 and 50% by weight of the total composition before steaming;
S is between 7 and 20% by weight of the total composition before steaming, and
L represents from 1 to 3% by weight of the total composition before steaming.

2. - Method according to claim 1, **characterized in that** the liquid E₁, E₂, E₃ are water.

3. - Method according to claim 1 or claim 2, **characterized in that** the predetermined amount of yeast L added at the sub-step (C2) is distributed in an amount of baker's yeast L_{B} between 0.2 and 2% by weight of the total composition before steaming and a quantity of chemical yeast L_{C} between 0.1 and 0.3% by weight of the total composition before steaming.

4. - Method according to claim 3, **characterized in that** the quantity of the constituents of the food composition are such that:
E₁ represents 13.04% by weight of the total composition before steaming;
E₂ represents 31.65% by weight of the total composition before steaming;
E₃ represents 22.15% by weight of the total composition before steaming;
CR represents 15.82% by weight of the total composition before steaming;
S represents 15.82% by weight of the total composition before steaming;
L_{B} represents 1.33% by weight of the total composition before steaming;
Lc represents 0.19% by weight of the total composition before steaming.

5. - Method according to one of claims 1 to 4, **characterized in that** the sub-step (A1) is performed by means of a beater-mixer, then the resulting homogeneous fluid is placed in a cooling chamber until its temperature is between 0 and 4°C before proceeding to the sub-step (A2).

6. - Method according to one of claims 1 to 5, **characterized in that** the cooling sub-step (A4) and the cooling step (F) are made in blast chiller.

7. - Method according to one of claims 1 to 6, **characterized in that** the semolina S used in step (B2) is a rice flour.

8. - Method according to claim 1-6, **characterized in that** the semolina S used in step (B2) is an extra fine wheat semolina, commonly known as fine-fine semolina.

9. - Method according to one of claims 3 to 8, **characterized in that** the sub-step (C2) is carried out as follows:
- baker's yeast L_{B} is diluted in a quantity of warm water approximately being equal, by weight, to 2.4 times the weight of the yeast L_{B} before being introduced to the mixture;
- after appearance of the first signs of fermentation, the chemical yeast Lc is finally included in the mixture so as to obtain the third composition.

10. - Method according to one of claims 1 to 9, **characterized in that** the third composition obtained in step (C) is allowed to stand prior molding, especially at a temperature approximately equal to 30°C for a period of 45 minutes.

11. - Method according to one of claims 1 to 10, **characterized in that** the third composition is poured, during step (D), a plurality of silicone molds of a few cubic centimeters in volume.

12. - Method according to one of claims 1 to 11, **characterized in that** the steaming step (E) is carried out in a steam oven for a period of 6 minutes.

13. - Method according to one of claims 1 to 12, **characterized in that** an additional step is performed between sub-steps (C1) and (C2), this step consisting in adding to the mixture an additional quantity of salt equal to about 0.19% by weight of the total amount of the other components forming the composition before steaming, and an additional amount of sugar equal to approximately 1.27% by weight of the total amount of the other components forming the composition before steaming.

14. - Method according to one of claims 1 to 13, **characterized in that** an additional step is performed between the sub-step (B2) and step (C) or between step (D) and step (E), this additional step consisting in adding to the mixture one or more ingredients for enhancing the taste of the final food composition.
